(19) Europäisches Patentamt
European Patent Office
Office européen des brevets

(11) **EP 1 992 661 B1**

(12) **EUROPEAN PATENT SPECIFICATION**

(45) Date of publication and mention of the grant of the patent:
**16.04.2014 Bulletin 2014/16**

(21) Application number: **07737985.7**

(22) Date of filing: **07.03.2007**

(51) Int Cl.:
*C08L 23/08* [(2006.01)]     *C09D 123/08* [(2006.01)]

(86) International application number:
**PCT/JP2007/054472**

(87) International publication number:
**WO 2007/102554 (13.09.2007 Gazette 2007/37)**

(54) **AQUEOUS RESIN COMPOSITION**

WÄSSRIGE HARZZUSAMMENSETZUNG

COMPOSITION DE RESINE AQUEUSE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **07.03.2006 JP 2006060538**

(43) Date of publication of application:
**19.11.2008 Bulletin 2008/47**

(73) Proprietor: **TOHO CHEMICAL INDUSTRY CO., LTD.**
**Tokyo 104-0044 (JP)**

(72) Inventors:
 • **KIKUCHI, Noriyuki**
   **Yokosuka-shi, Kanagawa 237-0062 (JP)**
 • **TERUNUMA, Yasunori**
   **Yokosuka-shi, Kanagawa 237-0062 (JP)**
 • **MURAMATSU, Takashi**
   **Yokosuka-shi, Kanagawa 237-0062 (JP)**
 • **AKIMOTO, Mikio**
   **Yokosuka-shi, Kanagawa 237-0062 (JP)**
 • **NOBUCHIKA, Kazuo**
   **Yokosuka-shi, Kanagawa 237-0062 (JP)**
 • **NAKAMOTO, Tadashige**
   **Kakogawa-shi, Hyogo 675-0023 (JP)**

(74) Representative: **Schaad, Balass, Menzl & Partner AG**
**Dufourstrasse 101**
**Postfach**
**8034 Zürich (CH)**

(56) References cited:
| JP-A- 08 267 004 | JP-A- 09 314 733 |
| JP-A- 2000 218 230 | JP-A- 2000 254 583 |
| JP-A- 2000 282 254 | JP-A- 2002 241 670 |
| JP-A- 2002 241 957 | JP-A- 2002 348 523 |
| JP-A- 2006 022 127 | US-B1- 6 242 512 |
| US-B1- 6 660 801 | |

**Description**

TECHNICAL FIELD

The present invention relates to an aqueous resin composition. Specifically, the present invention relates to an aqueous resin composition, whose coating film provides excellent coating adhesion, corrosion resistance, on a metal surface.

BACKGROUND ART

Conventionally, steel plates and steel materials that are electric or hot-dip galvanized and further chromium-treated for the prevention of white rust are used for household appliances, cars, building materials. However, since chromium treatment only is not enough for the improvement in the corrosion resistance of steel plates and steel materials due to the elusion of the chromium-treated layer, a resin composition for surface treatment is proposed, for example, in which a water-dispersible silica compound and a water-dispersible chromium compound are contained in a dispersion of a copolymer resin of an olefin and an $\alpha,\beta$-ethylenically unsaturated carboxylic acid (Patent Document 1).

However, in household appliances industry, there is a growing demand for steel plates that can eliminate coating (i.e., that can be used without coating) from viewpoints of process saving and low cost. Therefore, since there is also a growing demand for the improved properties in characteristics of surface appearance such as fingerprint-proof property, besides for those of corrosion resistance and coating adhesion that have been demanded until now, various surface treating agents that use an organic resin such as acrylic resin, urethane resin, olefin resin, and epoxy resin have been selectively developed and used according to applications and purposes.

For example, a manufacturing method of a surface-treated steel plate is disclosed for the improved properties of corrosion resistance, fingerprint-proof property, through the formation of an organic composite coating onto a chromate-treated coating, with specific fine-grained colloid sol additionally prepared into the aqueous organic resin (Patent Document 2).

Among known surface-treated steel plates, a surface-treated steel plate with a chromium-resin treating film as above, or a surface-treated steel plate with an organic composite coating on chromate treatment has higher corrosion resistance.

However, since a chromium-treated film as described above contains hexavalent chromium for which carcinogenicity, liver failure, dermopathy, have been indicated, it is desired to develop chromium-free surface-treated steel plates and steel materials that contain no chromiums.

For the development of chromium-free surface-treated steel plates and steel materials, since the same level of corrosion resistance as that of chromium surface-treated ones is required, it is essential to improve the properties by a surface treating agent. Use of solvent type surface treating agents tends to be restricted due to the problems related to resources, environment, safety, and thus aqueous surface treating agents are desired.

Generally, to achieve aqueous resin, an emulsifier, hydrophilic component, are needed for aqueous dissolution and aqueous dispersion; however, their presence may increase hydrophilicity of an aqueous surface treating agent and decrease corrosion resistance.

In addition, blending two or more kinds of aqueous dispersing elements to compensate for the lack of performance, are conducted to increase or improve functions. However, any of the disadvantages of the aqueous dispersing element used has precluded the completion of a well-balanced product.

Methods to improve the corrosion resistance of a surface treating agent, proposed until now, include, for example, a surface treating agent for metals, containing an aqueous emulsion of ethylene/acrylic acid copolymer that volatilizes a neutralizer (e.g., an amine with a boiling point of 100°C or below), which is a hydrophilic component, to prevent water from remaining, after film formation (Patent Document 3), a surface treating agent or a metal anticorrosive to improve corrosion resistance or coating adhesion, with many carboxyl groups contained in polyacrylic acid (Patent Documents 4 and 5), or a surface-treated metal plate whose adhesion between the underlying metal and the upper film and corrosion resistance are improved by combining tannic acid, a silane coupling agent, and fine silica (Patent Document 6).

However, for the surface treating agent for metals, described in the Patent Document 3, combination use with a cross linking agent is essential for neutralizing the carboxyl group of a hydrophobic resin and emulsifying. However, since use of an internal cross linking agent tends to increase mean particle diameter due to the cross linking, there were problems with the mechanical stability, such as possible clogging during spraying.

In addition, as for the treating agent or the anticorrosive described in the Patent Documents 4 and 5, there was a disadvantage that a large amount of an agent could not be used since they become water soluble with a multivalent carboxylic acid, like polyacrylic acid, only, and even if a large amount of cross linking agents is added, they easily dissolve in alkali and provide lower corrosion resistance after alkaline degreasing.

Galvanized surface, with no chromium treatment conducted, is a material with a problem with adhesion properties. Particularly, as for wetproof adhesion properties, a wetproof test reported that the cohesion failure of plated layer due to the corrosion of a galvanized layer became dominant and decreased adhesion properties (Non-Patent Document 1). Therefore, it is considered essential to improve coating adhesion to the zinc surface of a chromium-free surface-treated steel plate.

As measures against this, methods for surface treatment with a phosphate, or for example, coating an upper layer after surface treatment with tannic acid and a silane coupling agent, as described in the Patent Document 6, has been proposed; however, these methods require 2-step treatment, and thus it is desired to provide sufficient adhesion with a treatment using one solution.

Generally, a surface treating agent for chromium-free surface-treated steel plates should meet the needs of not only the coating adhesion and corrosion resistance but also many properties such as lubricity, workability, press molding property, paintwork, fingerprint proof property, conductivity, spot weldability, solvent resistance, and alkali resistance.

Patent Document 1: Japanese Patent Application Publication No. JP-A-03-131370
Patent Document 2: Japanese Examined Patent Publication No. JP-B-04-014191
Patent Document 3: Japanese Patent Application Publication No. JP-A-2005-220237
Patent Document 4: Japanese Patent Application Publication No. JP-A-2000-282254
Patent Document 5: Japanese Examined Patent Publication No. JP-B-07-051758
Patent Document 6: Japanese Patent Application Publication No. JP-A-2005-206921
Non-Patent Document 1: Shigeyoshi Maeda: Metal as an adherend and its surface, The Adhesion Society of Japan 13 (1), 1 (1993)

DISCLOSURE OF THE INVENTION

[Problems to be Solved by the Invention]

The problem to be solved by the present invention is to provide a practically useful aqueous resin composition which enables to obtain a coating film that is satisfactory not only in corrosion resistance but also in coating adhesion when applied over a metal surface.

Specifically, it is to provide an aqueous resin composition which enables, in a form of a thin film having a thickness of 0.1-5 $\mu$m, to exhibit various properties practically required for surface treating agents for chromium-free surface-treated steel plates, namely excellent corrosion resistance, adhesion to steel plates, durability against alkaline degreasing agents or solvents which are used for removing a press oil used during press molding, adhesion to an overcoating material which is used for aesthetic purposes, mechanical stability.

[Means for Solving the Problem]

As a result of keen examination, the inventors of the present invention discovered that use of a copolymer of an $\alpha,\beta$-ethylenically unsaturated carboxylic acid and an olefin, and a carboxylic acid polymer enabled to obtain an aqueous resin composition that maintains sufficient corrosion resistance and exhibits an excellent coating adhesion when applied to a metal surface, and completed the present invention.

Specifically, the present invention relates to an aqueous resin composition containing 100 parts by mass of a copolymer of an $\alpha,\beta$-ethylenically unsaturated carboxylic acid, an olefin and 0.1-10 parts by mass of a carboxylic acid polymer, and a neutralizer. Another aspect of the present invention is an aqueous resin composition, for metal surface treatment, containing 100 parts by mass of a copolymer of an $\alpha,\beta$-ethylenically unsaturated carboxylic acid and an olefin and 0.1-10 parts by mass of a carboxylic acid polymer.

The carboxylic acid polymer contained in the aqueous resin composition is preferably a polymaleic acid.

It is preferable that the aqueous resin composition further contains 0.5-0.9 equivalent of a base as a neutralizer with respect to all carboxyl groups in the copolymer and the carboxylic acid polymer.

It is preferable that the aqueous resin composition contains 0.1-10 parts by mass of 1, or 2 or more kinds of dispersants selected from the group consisting of (a) a saturated or unsaturated fatty acid (salt) or a derivative thereof, and (b) a high molecular surfactant containing a carboxyl group, and combinations thereof, with respect to 100 parts by mass of the copolymer of the $\alpha,\beta$-ethylenically unsaturated carboxylic acid and the olefin.

It is preferable that the aqueous resin composition of the present invention is a dispersion or dissolution system of resin particles containing the copolymer of the $\alpha,\beta$-ethylenically unsaturated carboxylic acid and the olefin and the carboxylic acid polymer, and that the mean particle size of the resin particles is 100 nm or less.

More preferably, 0.1-10 parts by mass of a silane coupling agent is contained with respect to 100 parts by mass of a solid content of the aqueous resin composition.

More preferably, 0.1-30 parts by mass of a compound having 1, or 2 or more kinds of a carbodiimide group and/or an oxazoline group is contained with respect to 100 parts by mass of the solid content of the aqueous resin composition.

Furthermore, the present invention relates to a method for producing the resin composition, the method including adding a copolymer of an $\alpha,\beta$-ethylenically unsaturated carboxylic acid and an olefin and a carboxylic acid polymer to an aqueous medium for dispersion of both polymers.

[Effects of the Invention]

The aqueous resin composition of the present invention can provide excellent corrosion resistance, coating adhesion, even in a form of a thin film having a thickness of only 0.1-5 $\mu$m, and thus is practically very useful as a surface treating agent for chromium-free surface-treated steel plates.

An aqueous resin composition having the above-described properties can be preferably produced by the production method of the present invention.

BEST MODES FOR CARRYING OUT THE INVENTION

A copolymer of an $\alpha,\beta$-ethylenically unsaturated carboxylic acid and an olefin, used herein, refers to a copolymer containing constitutional units derived from an olefin of at least 50% by mass in the copolymer (i.e., less than 50% by mass of constitutional units derived from an $\alpha,\beta$-ethylenically unsaturated carboxylic acid), namely a copolymer obtained by copolymerization of an olefin and an unsaturated carboxylic acid by a known method. As aspects of the copolymer, a random copolymer, a block copolymer, and a copolymer with an unsaturated carboxylic acid grafted can be included.

The olefins used for the copolymer include ethylene and propylene, and ethylene is the most preferable.

The $\alpha,\beta$-ethylenically unsaturated carboxylic acids used for the copolymer include, but are not limited to, monocarboxylic acids such as acrylic acid, methacrylic acid, crotonic acid, and isocrotonic acid, and dicarboxylic acids such as maleic acid, fumaric acid, and itaconic acid, and acrylic acid is preferred.

The weight average molecular weight of the copolymer of an $\alpha,\beta$-ethylenically unsaturated carboxylic acid and an olefin of the present invention is 1,000-100,000; as an aqueous resin composition, it is preferably 3,000-70,000 and more preferably 5,000-40,000 in view of water dispersion.

In view of the improvement in water dispersion and adhesion to a metal surface, use as a reaction group for post cross-linking, aimed at the improvement in the properties of a film during film formation and furthermore improvement in blocking-proof and waterproof properties, the content ratio of the constitutional units derived from the $\alpha,\beta$-ethylenically unsaturated carboxylic acid in the copolymer is preferably 5-30% by mass, and more preferably 10-25% by mass to the total mass of the copolymer.

The copolymer of an olefin and an $\alpha,\beta$-ethylenically unsaturated carboxylic acid, as used herein, may include the constitutional units derived from other monomers as far as they do not impair the effects of the invention.

The content ratio of the constitutional units derived from other monomers in the copolymer of an olefin and an $\alpha,\beta$-ethylenically unsaturated carboxylic acid is preferably 10% by mass or less, and more preferably 5% by mass or less to the total mass of the copolymer.

The most preferable copolymer of an olefin and an $\alpha,\beta$-ethylenically unsaturated carboxylic acid is an ethylene/acrylic acid copolymer.

The carboxylic acid polymer (hereinafter, also referred to as polycarboxylic acid) according to the present invention refers to a polymer with constitutional units derived from $\alpha,\beta$-ethylenically unsaturated carboxylic acid contained in a copolymer of 90% by mass or more. Examples of the $\alpha,\beta$-ethylenically unsaturated carboxylic acid include the monocarboxylic acid and dicarboxylic acid described above.

The carboxylic acid polymers include, for example, polyacrylic acid, polymethacrylic acid, acrylic acid/maleic acid copolymer, and polymaleic acid; in view of corrosion resistance and adhesion to a steel plate and paint, polymaleic acid is the most preferable.

The weight average molecular weight of the carboxylic acid polymer of the present invention is 500-30,000; to prevent the reduction of mechanical stability due to an increase of the mean particle size of resin particles, it is preferably 800-10,000, more preferably 900-3,000, and particularly preferably 1,000-2,000.

The blending quantity of a carboxylic acid polymer in the aqueous resin composition of the present invention is 0.1-10 parts by mass, preferably 0.5-5 parts by mass, and more preferably 1-3 parts by mass with respect to 100 parts by mass of a copolymer of an $\alpha,\beta$-ethylenically unsaturated carboxylic acid and an olefin.

A film may deteriorate when the blending quantity of the carboxylic acid polymer exceeds 10 parts by mass, since phase separation may occur to prevent the formation of a uniform coating film and a polycarboxylic acid-rich part starts to dissolve during alkaline degreasing.

The aqueous resin composition of the present invention is preferably in the form of aqueous dispersion of a copolymer of an $\alpha,\beta$-ethylenically unsaturated carboxylic acid and an olefin, and a carboxylic acid polymer. To obtain the aqueous dispersion, the carboxyl group in the (co)polymer must be neutralized partially or completely using a neutralizer.

The neutralizers used herein include, for example, ammonia water, primary amines, secondary amines, tertiary amines, and strong bases such as hydroxides of alkaline metals or alkaline-earth metals. Among these, in view of the improvement in water resistance of a coating film, triethylamine that volatilizes during drying is desired. However, due to the small effect of an amine on the improvement in water dispersibility, it is preferred to use a combination of a strong base and an amine, preferably a combination of NaOH and triethylamine.

To reduce the blending quantity of the below-mentioned compound having a surface-active properties and limit the viscosity of an aqueous dispersing element within a preferred range in view of handling, the blending quantity of the neutralizer in the aqueous resin composition of the invention is preferably 0.5-0.9 equivalent, more preferably 0.6-0.8 equivalent to all the carboxyl groups in the copolymer of an $\alpha,\beta$-ethylenically unsaturated carboxylic acid and an olefin. The blending quantity of a carboxylic acid polymer is 10% or less (preferably 1-3%) of the blending quantity of the copolymer of an $\alpha,\beta$-ethylenically unsaturated carboxylic acid and an olefin, and thus the addition quantity of the neutralizer is based only on the quantity of the carboxyl groups in the copolymer.

When the strong base is used in combination with an amine, it is preferable to blend the strong base at 0.01-0.3 equivalent and the amine at 0.4-0.8 equivalent to all the carboxyl groups in the copolymer of an $\alpha,\beta$-ethylenically unsaturated carboxylic acid and an olefin.

To reduce the mean particle size of resin particles containing the copolymer of an $\alpha,\beta$-ethylenically unsaturated carboxylic acid and an olefin, and the carboxylic acid polymer in the aqueous resin composition of the invention, and further, to improve the wettability to a steel plate, it is preferable to use 1, or 2 or more compounds having surface-active properties, selected from the group consisting of (a) saturated or unsaturated fatty acids (salts) or derivatives thereof and (b) macromolecular surfactants containing a carboxyl group to emulsify the copolymer of an $\alpha,\beta$-ethylenically unsaturated carboxylic acid and an olefin, and the polycarboxylic acid. This dramatically improves mechanical stability, allowing use for not only a roll coater method but also for spray paint.

The saturated fatty acids include propionic acid, butyric acid, valeric acid, caproic acid, enanthic acid, caprylic acid, pelargonic acid, capric acid, undecylic acid, lauric acid, tridecylic acid, myristic acid, pentadecylic acid, palmitic acid, margaric acid, stearic acid, nonadecylic acid, arachic acid, henicosanoic acid, behenic acid, tricosanoic acid, lignoceric acid, pentacosanoic acid, montanoic acid, nonacosanoic acid, melissic acid, hentriacontanoic acid, dotriacontanoic acid, tetratriacontanoic acid, ceroplastic acid, hexatriacontanoic acid, octatriacontanoic acid, hexatetracontanoic acid, and natural saturated fatty acids contained in tallow acids, soy acids, tall oil acids.

The unsaturated fatty acids include obtusilic acid, caproleic acid, 10-undecylenic acid, laurolenic acid, physeterylic acid, myristoleic acid, palmitoleic acid, petroselinic acid, petroselaidic acid, oleic acid, elaidic acid, vaccenic acid, gadoleic acid, cetoleic acid, erucic acid, brassidic acid, selacholeic acid, thymene acid, Lumepueic acid, sorbic acid, linoleic acid, linolelaidic acid, hiragonic acid, $\alpha$-eleostearic acid, $\beta$-eleostearic acid, punicinic acid, linolenic acid, elaidolinolenic acid, pseudoeleostearic acid, moroctic acid, $\alpha$-parinaric acid, $\beta$-parinaric acid, arachidonic acid, clupanodonic acid, herring acid, ricinoleic acid, and licanic acid, and the natural unsaturated fatty acids contained in the tallow acids, soy acids, tall oil acids, and the like.

The macromolecular surfactants containing a carboxyl group include an $\alpha$-olefin/maleic acid copolymers.

It is preferable that such neutralizers neutralize a carboxyl group, function as a surfactant, and volatilize during the formation of a coating film to avoid deterioration of corrosion resistance. Therefore, among the fatty acids and the macromolecular surfactants, those having a molecular weight as high as possible and furthermore waterproof properties are preferred. However, it should be noted that an excessively high molecular weight inhibits the surfactant function.

The corrosion resistance of the aqueous resin composition of the present invention can be improved by blending a silane coupling agent. Examples include vinyltrimethoxysilane, vinyltriethoxysilane, $\gamma$-chloropropylmethoxysilane, $\gamma$-aminopropyltryethoxysilane, N-($\beta$-aminoethyl)-$\gamma$-aminopropyltrimethoxysilane, N-($\beta$-aminoethyl)-$\gamma$-aminopropylmethyldimethoxysilane, $\gamma$-glycidoxypropyltrimethoxysilane, $\gamma$-glycidoxymethyldimethoxysilane, $\gamma$-methacryloxypropyltrimethoxysilane, and $\gamma$-mercaptopropyltrimethoxysilane. Among these, a silane coupling agent having a glycidyl group is most effective for corrosion resistance, alkali resistance, solvent resistance, and therefore is preferred.

The blending quantity of the silane coupling agent is preferably 0.1-10 parts by mass with respect to 100 parts by mass of the solid content of an aqueous resin composition. An excessively small blending quantity provides no advantages of blending, while an excessively large blending quantity causes turbidity over time and forms a precipitate. Therefore, it is most preferable to blend 2-7 parts by mass with respect to 100 parts by mass of the solid content of an aqueous resin composition.

Furthermore, alkali resistance can be improved by blending a compound having a carbodiimide group with the aqueous resin composition of the present invention.

Examples include polycarbodiimide, N,N-dicyclohexylcarbodiimide, and N,N-diisopropylcarbodiimide; polycarbodiimide is particularly preferred.

Polycarbodiimide is commercially available, however, can be manufactured by heating an isocyanate having at least 2 or more isocyanate groups (e.g., diisocyanate, such as hexamethylenediisocyanate (HMDI), hydrogenated xylylenediisocyanate (HXDI), xylylenediisocyanate (XDI), 4,4-diphenylmethanediisocyanate (MDI), or tolylenediisocyanate (TDI)) in the presence of a carbodiimidization catalyst.

The carbodiimide compound can also be denatured to become water soluble, and the water-soluble carbodiimide compounds are preferred from the viewpoint of solution stability.

When the blending quantity of the carbodiimide compound is too small, no advantage can be obtained, and when too large, negative influence is exerted on the corrosion resistance due to the hydrophilicity of the carbodiimide compound itself. Therefore, it is preferred to blend 0.1-30 parts by mass with respect to 100 parts by mass of the solid content of an aqueous resin composition. In view of waterproof properties, it is more preferred to blend 1-10 parts by mass. Blending 2-7 parts by mass enables to achieve maximum effects.

Furthermore, the aqueous resin composition of the present invention can improve alkali resistance and physical properties of a film by blending a compound having an oxazoline group (e.g., oxazoline crosslinking agent).

Commercial oxazoline crosslinking agents generally include EPOCROS W and K series (NIPPON SHOKUBAI Co., Ltd.) with a styrene or an acrylic ester copolymerized.

The blending quantity of an oxazoline compound is 0.1-30 parts by mass with respect to 100 parts by mass of an aqueous resin composition. In view of physical properties of a film, blending 1-15 parts by mass is preferred. Blending 2-12 parts by mass enables to achieve maximum effect.

Ion exchanged water is preferable as the water used in the present invention.

It is difficult to maintain the same quality with tap water since it contains ionic impurities such as chlorine ion that cause chelating effects of polymaleic acid against calcium and magnesium ions, and addition of a silane coupling agent may destabilize the system.

To improve corrosion resistance, a different resin or a wax may be blended after water dispersion, or may be blended as an aqueous dispersing element to the aqueous resin composition of the present invention, as long as it does not impair the effect achieved by the present invention.

As a resin to be blended, one compatible with an $\alpha,\beta$-ethylenically unsaturated carboxylic acid copolymer is preferred. Examples include rosin or derivatives thereof or low-density polyethylene.

Any wax can be blended as long as the object of the present invention is not impaired; 1, or 2 or more waxes may be blended. Waxes that may be used are roughly divided into 2 types, natural and synthetic waxes. For example, carnauba wax, rice bran wax, candelilla wax, montan wax and derivatives thereof, mineral oil wax, microcrystalline wax, paraffin wax, or derivatives thereof with a carboxyl group added can be used as natural waxes. Synthetic waxes include oxidative products such as polyethylene wax and polypropylene wax, and denature waxes such as derivatives thereof with a carboxyl group added. Furthermore, copolymerized waxes of ethylene and propylene, oxidized waxes of ethylene copolymer, and furthermore waxes with maleic acid added, fatty acid ester, can be illustrated as synthetic waxes.

In a preferable embodiment of the aqueous resin composition of the present invention, the content of resin particles, containing the copolymer of an $\alpha,\beta$-ethylenically unsaturated carboxylic acid and an olefin, and the carboxylic acid polymer in an aqueous resin composition, is 5-60% by mass; the mean particle size is preferably 100 nm or less, more preferably 50 nm or less.

The mean particle size of the resin particles can be adjusted by a dispersion method, kinds of ammonia or amine used for neutralization, or the quantity of monovalent metal. Or the mean particle size can be reduced with a saturated or unsaturated fatty acid used for emulsification, derivatives thereof, or a macromolecular surfactant containing a carboxyl group.

Excellent results of properties such as mechanical stability, film formation, drying, water resistance of a coating film, can be achieved by reducing the particle size of the resin particles. An increase of the mean particle size of the resin particles may cause clogging during spraying.

The production methods of the aqueous resin composition according to the present invention include the followings:

(1) a method of adding an aqueous solution (aqueous dispersing element), obtained by partial or complete neutralization of a carboxylic acid polymer with a monovalent metal or an amine, to the aqueous dispersing element of a copolymer of an $\alpha,\beta$-ethylenically unsaturated carboxylic acid and an olefin, and

(2) a method of adding a copolymer of an $\alpha,\beta$-ethylenically unsaturated carboxylic acid and an olefin, and a carboxylic acid polymer (these may be blended in advance) to an aqueous medium and dispersing both polymers.

Of the above-described methods, the method (2) is more preferable from the viewpoint of improvement in mechanical stability, e.g., further reduction of the mean particle size of the resin particles in the aqueous resin composition that enables prevention of clogging during spraying. The method (2) has effects of decreasing the pH of an aqueous solution (aqueous dispersing element) and stabilizing the system when a silane coupling agent is blended.

As a more concrete example of the method (2), a copolymer of an $\alpha,\beta$-ethylenically unsaturated carboxylic acid and an olefin, a carboxylic acid polymer, and a neutralizer, and other resins or waxes as needed, are fed, and furthermore, water is fed to make the concentration of the resin particle at 25-70% by mass, and the temperature is risen to, for example, 70-250°C for dissolution and dispersion. After dissolution or dispersion, dilution water is further added for dissolution or dispersion, followed by aging for about 1 hour at the dissolution or dispersion temperature. Subsequently, this is cooled to 60°C to room temperature.

In producing the aqueous resin composition of the present invention or spraying it to a metal surface, an antifoaming agent may be added to prevent foaming; a usual commercial antifoaming agent may be used as long as it does not cause shedding on a sprayed film.

In spraying the aqueous resin composition, an organic solvent may be blended to reduce interfacial tension and to increase wettability to a steel plate. Preferred organic solvents include, but are not limited to, methanol, ethanol, isopropanol, butanols, hexanol, 2-ethylhexanol, ethylether or butylether of ethylene glycol, diethylene glycol, and propylene glycol; 2 or more kinds may be blended.

The aqueous resin composition of the present invention enables to obtain a film excellent in corrosion resistance and coating adhesion when applied to a metal surface and dried in a drier.

A metal subject to coating with the aqueous resin composition of the present invention is preferably used for, without limitation, steel plates such as a galvanized steel plate that needs improvement in corrosion resistance due to no chromium treatment, since this is particularly excellent in corrosion resistance and coating adhesion as above and meets the object.

The effects of the invention can fully be achieved by applying the aqueous resin composition directly to an electro or hot-dip galvanized steel plate; further improvement in various physical properties can be expected by using an inorganic or organic surface treatment agent for the first layer to improve corrosion resistance or adhesion to the surface treatment agent, and spraying the aqueous resin composition of the present invention for the second layer.

Examples

Hereinafter, the present invention will be explained with preferred production examples of the aqueous resin composition of the present invention, and the examples using the composition. However, the present invention is not limited to the following examples and the comparative examples.

[Production Example 1: aqueous resin composition-1]

To an autoclave having an emulsifying equipment (1.0 L volume) equipped with a stirrer, thermometer, and thermo controller, 200.0g of ethylene/acrylic acid copolymer ("Primacor 5990I," Dow Chemical Co., monomeric unit derived from acrylic acids: 20% by mass, melt index: 1300, weight average molecular weight: 20,000, acid value: 150), 8.0 g of an aqueous solution of polymaleic acid (manufactured by Nippon Oil & Fats Co., Ltd. "NONPOL PMA-50W," weight average molecular weight: approx. 1100 (a value converted to polystyrene), solid content: 50% by mass), 35.5 g of triethylamine (0.63 equivalent to all the carboxyl groups in the ethylene/acrylic acid copolymer), 6.9 g of 48% NaOH aqueous solutions (0.15 equivalent to all the carboxyl groups in the ethylene/acrylic acid copolymer), 3.5 g of tall oil acids ("HARTALL FA3" by HARIMA CHEMICALS, Inc.), and 792.6 g of ion exchanged water were added and sealed, followed by stirring at 500 rpm, at 150°C and 5 atm for 3 hours.

Subsequently, the resultant mixture was cooled to 30°C. To this, 10.4 g of a silane coupling agent ("TSL8350," Momentive Performance Materials Japan LLC. (former GE Toshiba Silicones)), 31.2 g of polycarbodiimide ("SV-02," Nisshinbo Industries, Inc., weight average molecular weight: 2,700, and solid content: 40% by mass), and 72.8 g of ion exchanged water were added and stirred for 10 minutes to obtain an aqueous resin composition-1.

[Production Example 2: aqueous resin composition-2]

To an autoclave having an emulsifying equipment (1.0 L volume) equipped with a stirrer, thermometer, and thermo controller, 200.0 g of ethylene/acrylic acid copolymer (Primacor 5990I), 8.0 g of an aqueous solution of polymaleic acid (NONPOL PMA-50W), 35.5 g of triethylamine (0.63 equivalent to all the carboxyl groups in the ethylene/acrylic acid copolymer), 6.9 g of 48% NaOH aqueous solutions (0.15 equivalent to all the carboxyl groups in the ethylene/acrylic acid copolymer), 3.5 g of $\alpha$-olefin-maleic anhydride copolymer ("Diacarner 30," Mitsubishi Chemical), and 792.6g of ion exchanged water were added and sealed, followed by stirring at 500 rpm, at 150°C and 5 atm for 3 hours.

Subsequently, the resultant mixture was cooled to 30°C. To this, 10.4 g of a silane coupling agent (TSL8350), 31.2 g of polycarbodiimide (SV-02), and 72.8 g of ion exchanged water were added and stirred for 10 minutes to obtain an aqueous resin composition-2.

[Production Example 3: aqueous resin composition-3]

To an autoclave having an emulsifying equipment (1.0 L volume) equipped with a stirrer, thermometer, and thermo controller, 200.0 g of ethylene/acrylic acid copolymer (Primacor 5990I), 16.0 g of an aqueous solution of polymaleic acid (NONPOL PMA-50W), 35.5 g of triethylamine (0.63 equivalent to all the carboxyl groups in the ethylene/acrylic acid copolymer), 6.9 g of 48% NaOH aqueous solutions (0.15 equivalent to all the carboxyl groups in the ethylene/acrylic acid copolymer), 3.5 g of tall oil acids (HARTALL FA3), and 812.2 g of ion exchanged water were added and sealed, followed by stirring at 500 rpm, at 150°C and 5 atm for 3 hours.

Subsequently, the resultant mixture was cooled to 30°C. To this, 10.7 g of a silane coupling agent (TSL8350), 32.2 g of polycarbodiimide (SV-02), and 75 g of ion exchanged water were added and stirred for 10 minutes to obtain an aqueous resin composition-3.

[Production Example 4: aqueous resin composition-4]

To an autoclave having an emulsifying equipment (1.0 L volume) equipped with a stirrer, thermometer, and thermo controller, 200.0 g of ethylene/acrylic acid copolymer ("AC5120," Honeywell, monomeric unit derived from acrylic acids: 15% by mass, weight average molecular weight: 5,000, acid value: 120), 8.0 g of an aqueous solution of polymaleic acid (NONPOL PMA-50W), 34.6 g of triethylamine (0.8 equivalent to all the carboxyl groups in the ethylene/acrylic acid copolymer), 5.4 g of 48% NaOH aqueous solutions (0.15 equivalent to all the carboxyl groups in the ethylene/acrylic acid copolymer), 3.5 g of tall oil acids (HARTALL FA3), and 798.9 g of ion exchanged water were added and sealed, followed by stirring at 500 rpm, at 150°C and 5 atm for 3 hours.

Subsequently, the resultant mixture was cooled to 30°C. To this, 10.5 g of a silane coupling agent (TSL8350), 31.5 g of polycarbodiimide (SV-02), and 73.5 g of ion exchanged water were added and stirred for 10 minutes to obtain an aqueous resin composition-4.

[Production Example 5: aqueous resin composition-5]

To an autoclave having an emulsifying equipment (1.0 L volume) equipped with a stirrer, thermometer, and thermo controller, 200.0 g of ethylene/acrylic acid copolymer (Primacor 5990I), 8.0 g of an aqueous solution of polymaleic acid (NONPOL PMA-50W), 35.5 g of triethylamine (0.63 equivalent to all the carboxyl groups in the ethylene/acrylic acid copolymer), 6.9 g of 48% NaOH aqueous solutions (0.15 equivalent to all the carboxyl groups in the ethylene/acrylic acid copolymer), 3.5 g of tall oil acids (HARTALL FA3), and 774.4 g of ion exchanged water were added and sealed, followed by stirring at 500 rpm, at 150°C and 5 atm for 3 hours.

Subsequently, the resultant mixture was cooled to 30°C. To this, 10.5 g of a silane coupling agent (TSL8350) and 10.5 g of ion exchanged water were added and stirred for 10 minutes to obtain an aqueous resin composition-5.

[Production Example 6: aqueous resin composition-6]

To an autoclave having an emulsifying equipment (1.0 L volume) equipped with a stirrer, thermometer, and thermo controller, 200.0 g of ethylene/acrylic acid copolymer (Primacor 5990I), 8.0 g of an aqueous solution of polymaleic acid (NONPOL PMA-50W), 35.5 g of triethylamine (0.63 equivalent to all the carboxyl groups in the ethylene/acrylic acid copolymer), 6.9 g of 48% NaOH aqueous solutions (0.15 equivalent to all the carboxyl groups in the ethylene/acrylic acid copolymer), and 788.1 g of ion exchanged water were added and sealed, followed by stirring at 500 rpm, at 150°C and 5 atm for 3 hours.

Subsequently, the resultant mixture was cooled to 30°C. To this, 10.4 g of a silane coupling agent (TSL8350), 31.2 g of polycarbodiimide (SV-02), and 72.8 g of ion exchanged water were added and stirred for 10 minutes to obtain an aqueous resin composition-6.

[Production Example 7: aqueous resin composition-7]

To an autoclave having an emulsifying equipment (1.0 L volume) equipped with a stirrer, thermometer, and thermo controller, 200.0 g of ethylene/acrylic acid copolymer (Primacor 5990I), 10.0 g of an aqueous solution of polyacrylic acid ("Jurymer AC-10L," Nippon Junyaku, weight average molecular weight: 25,000, solid content: 40% by mass), 33.5 g of triethylamine (0.60 equivalent to all the carboxyl groups in the ethylene/acrylic acid copolymer), 6.9 g of 48% NaOH aqueous solutions (0.15 equivalent to all the carboxyl groups in the ethylene/acrylic acid copolymer), 3.5 g of tall oil acids (HARTALL FA3), and 788.1 g of ion exchanged water were added and sealed, followed by stirring at 500 rpm, at 150°C and 5 atm for 3 hours.

Subsequently, the resultant mixture was cooled to 30°C. To this, 10.4 g of a silane coupling agent (TSL8350), 31.2 g of polycarbodiimide (SV-02), and 72.8 g of ion exchanged water were added and stirred for 10 minutes to obtain an aqueous resin composition-7.

[Production Example 8: aqueous resin composition-8]

To an autoclave having an emulsifying equipment (1.0 L volume) equipped with a stirrer, thermometer, and thermo controller, 200.0 g of ethylene/acrylic acid copolymer (Primacor 5990I), 35.5 g of triethylamine (0.63 equivalent to all the carboxyl groups in the ethylene/acrylic acid copolymer), 6.9 g of 48% NaOH aqueous solutions (0.15 equivalent to all the carboxyl groups in the ethylene/acrylic acid copolymer), 3.5 g of tall oil acids (HARTALL FA3), and 788.1 g of ion exchanged water were added and sealed, followed by stirring at 500 rpm, at 150°C and 5 atm for 3 hours.
Subsequently, the resultant mixture was cooled to 30°C. To this, 40 g of an aqueous solution (20% by mass) of an aqueous solution of polymaleic acid (NONPOL PMA-50W), whose pH was adjusted to around 9 by gradually dropping triethylamine and ion exchanged water into it, 10.3 g of a silane coupling agent (TSL8350), 30.9 g of polycarbodiimide (SV-02), and 72.1 g of ion exchanged water were added and stirred for 10 minutes to obtain an aqueous resin composition-8.

[Production Example 9: aqueous resin composition-9]

To an autoclave having an emulsifying equipment (1.0 L volume) equipped with a stirrer, thermometer, and thermo controller, 200.0 g of ethylene/acrylic acid copolymer (Primacor 5990I), 8.0 g of an aqueous solution of polymaleic acid (NONPOL PMA-50W), 35.5 g of triethylamine (0.63 equivalent to all the carboxyl groups in the ethylene/acrylic acid copolymer), 6.9 g of 48% NaOH aqueous solutions (0.15 equivalent to all the carboxyl groups in the ethylene/acrylic acid copolymer), 3.5 g of tall oil acids (HARTALL FA3), and 790.5 g of ion exchanged water were added and sealed, followed by stirring at 500 rpm, at 150°C and 5 atm for 3 hours.
Subsequently, the resultant mixture was cooled to 30°C. To this, 9.4 g of a silane coupling agent (TSL8350), 28.1 g of polycarbodiimide (SV-02), 30.6 g of an oxazoline group containing polymer ("EPOCROS K-2030E" NIPPON SHOKUBAI Co., Ltd.) and 84.5 g of ion exchanged water were added and stirred for 10 minutes to obtain an aqueous resin composition-9.

[Comparative Production Example 1: comparative aqueous resin composition-1]

To an autoclave having an emulsifying equipment (1.0 L volume) equipped with a stirrer, thermometer, and thermo controller, 200.0 g of ethylene/acrylic acid copolymer (Primacor 5990I), 35.5 g of triethylamine (0.63 equivalent to all the carboxyl groups in the ethylene/acrylic acid copolymer), 6.9 g of 48% NaOH aqueous solutions (0.15 equivalent to all the carboxyl groups in the ethylene/acrylic acid copolymer), 3.5 g of tall oil acids (HARTALL FA3), and 788.1 g of ion exchanged water were added and sealed, followed by stirring at 500 rpm, at 150°C and 5 atm for 3 hours.
Subsequently, the resultant mixture was cooled to 30°C. To this, 10.3 g of a silane coupling agent (TSL8350), 30.9 g of polycarbodiimide (SV-02), and 72.1 g of ion exchanged water were added and stirred for 10 minutes to obtain a comparative aqueous resin composition-1.

[Comparative Production Example 2: comparative aqueous resin composition-2]

To an autoclave having an emulsifying equipment (1.0 L volume) equipped with a stirrer, thermometer, and thermo controller, 200.0 g of ethylene/acrylic acid copolymer (Primacor 5990I), 35.5 g of triethylamine (0.63 equivalent to all the carboxyl groups in the ethylene/acrylic acid copolymer), 6.9 g of 48% NaOH aqueous solutions (0.15 equivalent to all the carboxyl groups in the ethylene/acrylic acid copolymer), and 774.1 g of ion exchanged water were added and sealed, followed by stirring at 500 rpm, at 150°C and 5 atm for 3 hours.
Subsequently, the resultant mixture was cooled to 30°C. To this, 10.2 g of a silane coupling agent (TSL8350), 30.6 g of polycarbodiimide (SV-02), and 71.4 g of ion exchanged water were added and stirred for 10 minutes to obtain a comparative aqueous resin composition-2.

[Comparative Production Example 3: comparative aqueous resin composition-3]

To an autoclave having an emulsifying equipment (1.0 L volume) equipped with a stirrer, thermometer, and thermo controller, 200.0 g of ethylene/acrylic acid copolymer (Primacor 5990I), 35.5 g of triethylamine (0.63 equivalent to all the carboxyl groups in the ethylene/acrylic acid copolymer), 6.9 g of 48% NaOH aqueous solutions (0.15 equivalent to all the carboxyl groups in the ethylene/acrylic acid copolymer), and 774.1 g of ion exchanged water were added and sealed, followed by stirring at 500 rpm, at 150°C and 5 atm for 3 hours.

Subsequently, the resultant mixture was cooled to 30°C. To this, 10.2 g of a silane coupling agent (TSL8350), 30.6 g of polycarbodiimide (SV-02), and 71.4 g of ion exchanged water were added and stirred for 10 minutes to obtain an aqueous dispersion. To this, 8.0 g of an aqueous solution of polymaleic acid (NONPOL PMA-50W) was added without neutralization and stirred to obtain a comparative aqueous resin composition-3.

In addition to the aqueous resin compositions obtained by Production Example 1 to 9 and Comparative Production Example 1 to 3, the below-mentioned performance evaluation was carried out using the following commercial aqueous resin compositions (aqueous solutions of polymers):

- Comparative aqueous resin composition-4: aqueous solution of polyacrylic acid ("Jurymer AC-10S," Nippon Junyaku K.K., weight average molecular weight: 5,000)
- Comparative aqueous resin composition-5: aqueous solution of polymaleic acid ("NONPOL PMA-50W," Nippon Oil & Fats Co., Ltd., weight average molecular weight: approx. 1,100)
- Comparative aqueous resin composition-6: aqueous solution of methylvinylether-maleic anhydride copolymer ("AN-119," ISP Japan Ltd., weight average molecular weight: 200,000)
- Comparative aqueous resin composition-7: aqueous dispersion of ethylene/acrylic acid copolymer resin ("HYTEC S-3121," Toho Chemical Industry Co., Ltd., weight average molecular weight: 40,000)
- Comparative aqueous resin composition-8: aqueous solution of polyallylamine ("PAA-01," Nitto Boseki Co., Ltd., weight average molecular weight: 5,000)

Properties and physical properties of the samples used in the below-mentioned examples and comparative examples are indicated in Table 1.

However, the comparative aqueous resin composition-3 turns into a gel immediately after sample preparation, and therefore precluded the measurement of physical properties.

[Table 1]

| | Sample name | Residue after volatilization *1 | Viscosity *2 | pH*3 | Mean particle size *4 (nm) | Stability of solution *5 |
|---|---|---|---|---|---|---|
| Example 1 | Aqueous resin composition-1 | 20.3 | 10.0 | 9.1 | 28.5 | Stable |
| Example 2 | Aqueous resin composition-2 | 20.1 | 12.3 | 9.3 | 29.5 | Stable |
| Example 3 | Aqueous resin composition-3 | 20.5 | 14.0 | 8.6 | 28.7 | Stable |
| Example 4 | Aqueous resin composition-4 | 20.1 | 12.0 | 9.6 | 99.8 | Stable |
| Example 5 | Aqueous resin composition 5 | 21.1 | 10.0 | 9.5 | 30.0 | Stable |
| Example 6 | Aqueous resin composition-6 | 20.6 | 15.0 | 9.5 | 40.0 | Stable |
| Example 7 | Aqueous resin composition-7 | 20.2 | 13.0 | 8.9 | 40.0 | Stable |
| Example 8 | Aqueous resin composition 8 | 20.0 | 10.0 | 10.0 | 45.0 | Stable |
| Example 9 | Aqueous resin composition-9 | 20.0 | 8.0 | 10.0 | 60.0 | Stable |
| Comparative Example 1 | Comparative aqueous resin composition-1 | 19.1 | 10.0 | 9.4 | 40.0 | Stable |
| Comparative Example 2 | Comparative aqueous resin composition-2 | 20.0 | 12.9 | 9.6 | 43.0 | Stable |
| Comparative Example 3 | Comparative aqueous resin composition-3 | - | - | - | - | Gelling |
| Comparative Example 4 | Comparative aqueous resin composition-4 | 40.0 | 117.5 | 1.6 | Soluble | Stable |
| Comparative Example 5 | Comparative aqueous resin composition-5 | 50.0 | 31.0 | 1.2 | Soluble | Stable |
| Comparative Example 6 | Comparative aqueous resin composition-6 | 15.0 | 28.3 | 1.8 | Soluble | Stable |

(continued)

|  | Sample name | Residue after volatilization *1 | Viscosity *2 | pH*3 | Mean particle size *4 (nm) | Stability of solution *5 |
|---|---|---|---|---|---|---|
| Comparative Example 7 | Comparative aqueous resin composition-7 | 25.0 | 150.0 | 9.3 | 43.0 | Stable |
| Comparative Example 8 | Comparative aqueous resin composition-8 | 15.0 | 3.0 | 11.9 | Soluble | Stable |

*1 Measured according to JIS K-6833 (105°C, 3 hours).
*2 Measured according to JIS K-6833 (25%, mPa-s, stock solution).
*3 Measured according to JIS Z-8802 (25%, stock solution).
*4 Mean particle size was measured from the light-intensity distribution of a scattering light by particle-size-distribution measuring device NICOMP 380 (Particle Sizing Systems, Inc.).
*5 Stability immediately after production of the aqueous resin composition was evaluated visually.

<Manufacture of test plates>

(a) Steel plate: A hot-dip galvanized steel plate was used.
(b) Manufacture of a surface-treated steel plate

The steel plate surface was degreased using a mixture of xylene, toluene, and acetone (mixing ratio 2:2: 1).
Each aqueous resin composition solution was prepared to make the total solid content 15 wt% by adding 5 parts by mass of colloidal silica to the solid content of 95 parts by mass of each of the aqueous resin composition (excluding the comparative aqueous resin composition-3).
The aqueous resin composition solution was applied to the degreased steel plate at thickness of 1 $\mu$m by a barcoater of #3, and was dried in a dryer kept at 105°C for 2 minutes and subsequently allowed to stand at room temperature for a day to be used as a test plate.

(c) Determination of adhesion quantity of a resin film

Si element on a steel plate after coating and drying was analyzed with a fluorescent X ray analyzer (Shimadzu Corporation; VXQ 150).
The Si analytical values of all the treatment solutions were approximately 23 mg/m$^2$, demonstrating that they were within the range of the target adhesion quantity of a resin film, 0.1-2 g/m$^2$.
The following formula was used for the calculation of the adhesion quantity of a resin film.

[Chemical Formula 1]

$$\text{Formula: Adhesion quantity (g/m}^2) = \text{Si analytical value (mg/m}^2) \times \text{SiO molecular weight (g) / Si atomic weight (g)} \times 0.05 \times 1{,}000$$

<Performance evaluation test>

(1) Temporal stability

Each aqueous resin composition solution prepared according to the protocol (b) was allowed to stand at room temperature to evaluate the temporal stability of each solution according to the following evaluation criteria. Evaluation results are shown in Table 2.

Evaluation criteria:

◎ (Double circle):    Stable for 1 month or longer
○ (Circle) :          Dissociated at 1 week
X:                    Dissociated at 1 day

(2) Mechanical stability

The concentration of the solid content of the aqueous resin composition was adjusted to 5% by mass, and 60 g was weighed. A mechanical stability test were conducted on the weighed sample at 1,000 rotation and 15 kg weight using a Marron mechanical stability testing machine (TESTER SANGYO CO,. LTD.), and filtration residue was measured at wire net of 200 meshes to evaluate mechanical stability by the following criteria:
Evaluation criteria:

◎ (Double circle):    Filtration residue is 20 ppm or less.
○ (Circle):           Filtration residue is 20-30 ppm.
Δ (Triangle):         Filtration residue is 30-50 ppm.
X:                    Filtration residue is 50 ppm or above.

(3) Corrosion resistance of flat area

A salt water spray test according to JIS-Z-2371 was conducted on each test plate produced by the protocol (b) until 48 hours to evaluate the corrosion resistance of flat area by the following criteria:
Evaluation results are shown in Table 2.

Testing machine: Salt spray test machine S120t type (Ascott Analytical Equipment Ltd.)

Evaluation criteria:

◎ (Double circle):    White rust develops in less than 3% of total area.
○ (Circle):           White rust develops in 3% or above to less than 20% of total area.
Δ (Triangle):         White rust develops in 20% or above to less than 50% of total area.
X:                    White rust develops in 50% or above of total area

(4) Adhesion of top coat

Melamine paint was coated on each test plate, produced by the protocol (b), with DOCTOR BLADE (Ueshima Seisakusho Co., Ltd.) to make membrane thickness 20 $\mu$m after drying, and after baking it at 150°C for 30 minutes, it was immersed in boiling water for 1 hour. When 1 hour passed after taking it out from boiling water, 100 squares (1 mm$^2$ each) were carved on the test plate using a cutter knife. A tape stripping test was conducted on this test plate. A five-point scale evaluation was conducted with the number of residual grids of a coating film to evaluate the adhesion of top coat as a parameter of the adhesion of resin film and top coat. Evaluation results are shown in Table 2. Point 4 or above (50% or above of paint residual ratio) is the coating adhesion desired for a surface treating agent. Evaluation criteria:

5: Paint residual ratio is 90% or above of total area.

4: Paint residual ratio is 50% or above to less than 90% of total area.

3: Paint residual ratio is less than 50% of total area.

2: Paint residual ratio is less than 30% of total area.

1: Paint residual ratio is less than 10% of total area.

(5) Stripping property of cellophane tape

Cellophane tape (Nichiban Co., Ltd.), cut into about 3 cm of length, was stuck on each test plate produced by the protocol (b) and allowed to stand under the conditions of 40°C and 90% humidity for I hour. Subsequently, it was allowed to stand at room temperature for 10 minutes, and the cellophane tape was stripped at an angle of 90 degrees to observe the stripping state visually. Stripping property of the cellophane tape was evaluated as a parameter of the adhesion between the resin film and zinc (hot-dip galvanized steel plate). Evaluation results are shown in Table 2. Evaluation criteria:

◎ (Double circle):    Film residual ratio is 80% or above of total area.
○ (Circle):    Film residual ratio is 50% or above to less than 80% of total area.
X:    Film residual ratio is less than 50% of total area.

(6) Alkali resistance tests

Each test plate produced by the protocol (b) was immersed in an alkaline degreasing agent (FC-364S, Nihon Parkerizing Co., Ltd.) at 60°C for 60 seconds, and was subsequently water-washed and dried to observe film residual state visually. Evaluation results are shown in Table 2.

Evaluation criteria:

◎ (Double circle):    Film residual ratio is 80% or above of total area.
○ (Circle):    Film residual ratio is 50% or above to less than 80% of total area.
X:    Film residual ratio is less than 50% of total area.

(7) Boiling water resistance

After each test plate produced by the protocol (b) was immersed in boiling water for 1 hour, those without any abnormality on a metal surface was evaluated as "Double circle" and those expanded as X by visual observation. Evaluation results are shown in Table 2.

(8) Solvent resistance test

A PET film was coated with an aqueous resin composition with no colloidal silica supplemented by a No.40 barcoater and dried at 105°C for 3 minutes. Subsequently, it was allowed to stand for one day, and 1g of a film made of the aqueous resin composition weighed and taken from the PET film was immersed in 200 g of a THF solution, followed by being stirred for 3 hours using a magnetic stirrer. Subsequently, it was filtered with a stainless net of 200 mesh, and the resin residual ratio (%) was determined by measuring the mass of the film that remained in the wire net. Evaluation results are shown in Table 2. Eighty percent or above is resin residual ratio desired as a surface treating agent.

Evaluation criteria:

◎ (Double circle):    Resin residual ratio is 80% or above of total mass.
○ (Circle):    Resin residual ratio is 60% or above to less than 80% of total mass.
Δ (Triangle):    Resin residual ratio is 40% or above to less than 60% of total mass.
X:    Resin residual ratio is less than 40% of total mass.

Performance evaluation results are shown in Table 2.

[Table 2]

| | Temporal stability | Mechanical stability | Corrosion resistance | Adhesion of top coat | Stripping property of cellophane tape | Alkali resistance | Boiling water resistance | Solvent resistance |
|---|---|---|---|---|---|---|---|---|
| Example 1 | ◎ | ◎ | ◎ | 5 | ◎ | ◎ | ◎ | ◎ |
| Example 2 | ◎ | ◎ | ◎ | 5 | ◎ | ◎ | ◎ | ◎ |
| Example 3 | ◎ | ◎ | ◎ | 5 | ◎ | ○ | ◎ | ◎ |
| Example 4 | ◎ | △ | ◎ | 5 | ◎ | ◎ | ◎ | ◎ |
| Example 5 | ◎ | ◎ | ◎ | 5 | ◎ | △ | ◎ | ○ |
| Example 6 | ◎ | △ | ◎ | 5 | ◎ | ◎ | ◎ | ◎ |
| Example 7 | ◎ | △ | ◎ | 5 | ◎ | ◎ | ◎ | ◎ |
| Example 8 | ◎ | △ | ◎ | 4 | ◎ | ◎ | ◎ | ◎ |
| Example 9 | ◎ | ◎ | ◎ | 5 | ◎ | ◎ | ◎ | ◎ |
| Comparative Example 1 | ◎ | ○ | ◎ | 2 | × | ◎ | ◎ | ◎ |
| Comparative Example 2 | ◎ | △ | ◎ | 2 | × | ◎ | ◎ | ◎ |
| Comparative Example 3 | - | - | - | - | - | - | - | - |
| Comparative Example 4 | ◎ | ◎ | △ | 3 | ○ | × | × | △ |
| Comparative Example 5 | ◎ | ◎ | ○ | 3 | × | × | × | × |
| Comparative Example 6 | ◎ | ◎ | ○ | 3 | × | × | × | ◎ |
| Comparative Example 7 | ◎ | △ | × | 1 | × | × | ◎ | △ |
| Comparative Example 8 | ◎ | ◎ | × | 3 | × | × | × | ○ |

As shown in Table 2, in Examples 1-9, stability over time, corrosion resistance, adhesion to top coating, stripping property of cellophane tape, and boiling water resistance, desired for surface treating agents, are secured.

Also, as for alkali resistance and solvent resistance, satisfactory results for surface treating agents are obtained in almost all the examples.

However, in Comparative Examples 1 and 2, with no aqueous solution of polymaleic acid (carboxylic acid polymer) contained, results are obtained that adhesion property to top coat and stripping property of cellophane tape are insufficient. In Comparative Example 3 where an aqueous solution of polymaleic acid was added without neutralization, it turns into a gel when a resin composition was prepared, and precludes the subsequent performance evaluation test.

Furthermore, in Comparative Examples 4-8 that correspond to conventional non-chromium surface treating agents, no satisfactory performance as a surface treating agent was obtained in almost all the items on which a performance evaluation test was conducted.

**Claims**

1. An aqueous resin composition comprising:

    100 parts by mass of a copolymer of an $\alpha,\beta$-ethylenically unsaturated carboxylic acid and an olefin containing constitutional units derived from an olefin of at least 50% by mass in the copolymer, and wherein the weight average molecular weight of the copolymer of the $\alpha,\beta$-ethylenically unsaturated carboxylic acid and the olefin is 1'000 to 100'000,
    0.1-10 parts by mass of a carboxylic acid polymer containing constitutional units derived from an $\alpha,\beta$-ethylenically unsaturated carboxylic acid of 90% by mass or more in the polymer, and wherein the weight average molecular weight of the carboxylic acid polymer is 500 to 30'000,
    and a neutralizer.

2. The aqueous resin composition according to claim 1, wherein the carboxylic acid polymer is a polymaleic acid.

3. The aqueous resin composition according to claim 1 to 2, further comprising:

    0.5-0.9 equivalent of a base as a neutralizer with respect to all carboxyl groupe in the copolymer and the carboxylic acid polymer.

4. The aqueous resin composition according to any one of claims 1 to 3, further comprising:

    0.1-10 parts by mass of 1, or 2 or more kinds of dispereants selected from than group consisting of (a) a saturated or unsaturated fatty acid (salt) or a derivative thereof, and (b) a high molecular surfactant containing a carboxyl group, and a combination thereof, with respect to 100 parts by mass of the copolymer of the $\alpha,\beta$-ethylenically unsaturated carboxylic acid and the olefin.

5. The aqueous resin composition according to any one of claims 1 to 4, wherein the aqueous resin composition is a dispersion or dissolution system of resin particles comprising the copolymer of the $\alpha,\beta$-ethylenically unsaturated carboxylic acid and the olefin and the carboxylic acid polymer, and the mean particle size of the resin particles is 100 nm or less.

6. The aqueous resin composition according to any one of claims 1 to 5, further comprising:

    0.1-10 parts by mass of a silane coupling agent with respect to 100 parte by mass of a solid content of the aqueous resin composition.

7. The aqueous resin composition according to any one of claims 1 to 6, further comprising:

    0.1-30 parts by mass of a compound having 1, or 2 or more kinds of a carbodiimide group and/or an oxazoline group with respect to 100 parts by mass of the solid content of the aqueous resin composition.

8. A method for producing the aqueous resin composition according to any one of claims 1 to 7, the method Comprising:

    a) adding

        1. 100 parts by mass of a copolymer of an $\alpha,\beta$-ethylenically unsaturated carboxylic acid and an olefin containing constitutional unite derived from an olofon of at least 50% by mass in the copolymer and having a molecular weight of 1'000 to 100'1000;
        ii. 0.1 to 10 parts by mass of a carboxylic acid polymer containing constitutional units derived from an $\alpha,\beta$-

ethylenically unsaturated carboxylic acid of 90% by mass or more in the polymer and having a molecular weight of 500 to 30'000, and

iii. 0.5 to 0.9% of a neutralizer to an aqueous medium,

b) adding water to obtain a concentration of the polymer particle at 25 to 70% by mass,

c) rising the temperature to 70 to 250°C for dissolution and dispersion of both polymers,

d) adding water after dissolution or dispersion followed by aging for about one hour at 70 to 250°C,

e) and subsequent cooling at a temperature between room temperature to 60°C.

9. Use of the aqueous resin composition of one of claims 1 to 7 for metal surface treatment.

**Patentansprüche**

1. Eine wässrige Harzzusammensetzung enthaltend:

100 Gewichtsteile eines Copolymers einer $\alpha,\beta$-ethylenisch ungesättigten Carbonsaure und ein Olefin enthaltend konstitutionelle Einheiten, die von einem Olefin abstammen mit wenigstens 50 Gewichts-% in dem Copolymer, und wobei das durchschnittliche Molekulargewicht des Copolymers der $\alpha,\beta$-ethylenisch ungesättigten Carbon-säure und des Olefins 1'000 bis 100'000 ist;
0.1 bis 10 Gewichtsteile eines Carbonsäurepolymers enthaltend konstitutionelle Einheiten, die von einer $\alpha,\beta$-ethylenisch ungesättigten Carbonsäure von 90% Gewichts-% oder mehr im Polymer abstammen, und wobei das durchschnittliche Molekulargewicht des Carbonsaurepolymers 500 bis 30'000 ist, und ein Neutralisierungsmittel.

2. Die wässrige Harzzusammensetzung nach Anspruch 1, in der das Carbonsaurepolymer eine Polymaleinsäure ist.

3. Die wässrige Harzzusammensetzung nach einem der Ansprüche 1 bis 2, ausserdem enthaltend:

0.5 bis 0.9 Äquivalente einer Base als ein Neutralisierungsmittel bezüglich aller Carboxylgruppen im Copolymer und dem Carbonsaurepolymer.

4. Die wässrige Harzzusammensetzung nach einem der Ansprüche 1 bis 3, ausserdem enthaltend:

0.1-10 Gewichtsanteile von 1 oder 2 oder mehre Arten von Dispergierungsmittel ausgewählt aus der Gruppe von

(a) einer gesättigten oder ungesättigen Fettsäure (Salz) oder deren Derivat, und
(b) einem hochmolekularen oberflächenaktiven Stoff enthaltend eine Carboxylgruppe, und eine Kombination davon, bezüglich 100 Gewichts% des Copolymers der $\alpha,\beta$-ethylenisch ungesättigten Carbonsäure und des Olefins.

5. Die wässrige Harzzusammensetzung nach einem der Ansprüche 1 bis 4, in der die wässrige Harzzusammensetzung ein Dispersions- oder Dissolutionssystem der Harzpartikel enthaltend das Copolymer der $\alpha,\beta$-ethylenisch ungesät-tigten Carbonsaure und des Olefins und Carbonsäurepolymers, wobei die Hauptpartikelgrösse der Harzpartikel und 100 nm oder weniger ist.

6. Die wässrige Harzzusammensetzung nach einem der Ansprüche 1 bis 5, weiter enthaltend: 0.1 bis 10 Gewichtsteile eines Silankupplungsmittels in Bezug auf 100 Gewichtsteile eines festen Inhalts der wässrigen Harzzusammensetzung.

7. Die wässrige Harzzusammensetzung nach einem der Ansprüche 1 bis 6, weiter enthaltend:

0.1 bis 30 Gewichtsteile einer Verbindung mit 1, oder 2 oder mehreren Arten einer Carbodiimidgruppe und/oder einer Oxazolingruppe bezüglich der 100 Gewichtsteile des festen Inhalts der wässrigen Harzzusammensetzung.

8. Ein Verfahren zur Herstellung der wässrigen Harzzusammensetzung nach einem der Ansprüche 1 bis 7, das Verfahren enthaltend:

a) Zugabe von

(i). 100 Gewichtsteilen eines Copolymers einer $\alpha,\beta$-ethylenisch ungesättigten Carbonsäure und eines Olefins enthaltend konstitutionelle Einheiten, die von einem Olefin abstammen und wenigstens 50 Gewichts% in dem Copolymer mit einem Molekulargewicht von 1'000 bis 100'000;

(ii). 0.1 bis 10 Gewichtsanteilen eines Carbonsäurepolymers enthaltend konstitutionelle Einheiten, die von einer $\alpha,\beta$-ethylenisch ungesättigten Carbonsäure von 90 Gewichts% oder mehr in dem Polymer und ein Molekulargewicht von 500 bis 30'000 aufweist, und

(iii). 0.5 bis 0.9 eines Neutralisierungsmittels zu einem wässrigen Mediums,

b) Zugabe von Wasser, um eine Konzentration der Polymerpartikel von 25 bis 70 Gewichts% zu erhalten,

c) Erhöhen der Temperatur von 70 bis 250°C für die Auflösung und Dispersion der beiden Polymere,

d) Zugabe von Wasser nach Auflösung oder Dispersion gefolgt durch Alterung für ungefähr eine Stunde bei 70 bis 250°C,

e) und nachfolgendes Kühlen auf eine Temperatur zwischen Raumtemperatur und 60°C.

9. Verwendung der wässrigen Harzzusammensetzung von einem der Ansprüche 1 bis 7 für die metallische Oberflächenbehandlung.

**Revendications**

1. Composition de résine aqueuse comprenant :

100 parties en masse d'un copolymère d'un acide carboxylique éthyléniquement insaturé en $\alpha,\beta$ et d'une oléfine contenant des motifs constitutifs dérivés d'une oléfine pour au moins 50 % en masse dans le copolymère, le poids moléculaire moyen en poids du copolymère de l'acide carboxylique éthyléniquement insaturé en $\alpha,\beta$ et de l'oléfine étant de 1000 à 100 000 ;

0,1-10 parties en masse d'un polymère d'acide carboxylique contenant des motifs constitutifs dérivés d'un acide carboxylique éthyléniquement insaturé en $\alpha,\beta$ pour au moins 90 % en masse dans le polymère, le poids moléculaire moyen en poids du polymère d'acide carboxylique étant de 500 à 30 000 ;

et un neutralisant.

2. Composition de résine aqueuse selon la revendication 1, dans laquelle le polymère d'acide carboxylique est un acide polymaléique.

3. Composition de résine aqueuse selon la revendication 1 ou 2, comprenant en outre :

0,5-0,9 équivalent d'une base servant de neutralisant par rapport à tous les groupes carboxyle dans le copolymère et le polymère d acide carboxylique.

4. Composition de résine aqueuse selon l'une quelconque des revendications 1 à 3 comprenant en outre

0,1-10 parties en masse de 1 ou au moins 2 types de dispersants choisis dans le groupe constitué par (a) un (sel d')acide gras saturé ou insaturé ou un dérivé de celui-ci, et (b) un tensioactif à haut poids moléculaire contenant un groupe carboxyle, ou d'une combinaison de ceux-ci, pour 100 parties en masse du copolymère de l'acide carboxylique éthyléniquement insaturé en $\alpha, \beta$ et de l'oléfine.

5. Composition de résine aqueuse selon l'une quelconque des revendications 1 à 4, la composition de résine aqueuse étant un système de dispersion ou de dissolution de particules de résine comprenant le copolymère de l'acide carboxylique éthyléniquement insaturé en $\alpha, \beta$ et de l'oléfine et le polymère d'acide carboxylique, et la taille moyenne de particules des particules de résine étant de 100 nm ou moins.

6. composition de résine aqueuse selon 1 une quelconque des reverdications 1 à 5, comprenant en outre :

0,1-10 parties en masse d un agent de couplage à base de silane pour 100 parties en masse de teneur en matières solides de la composition de résine aqueuse.

**7.** Composition de résine aqueuse selon l'une quelconque des revendications 1 à 6, comprenant er outre

0,1-30 parties en masse d'un compose comportant 1 ou au moins 2 types d'un groupe carbodiimide et/ou d'un groupe oxazoline pour 100 parties en masse de teneur en matières solides de la composition de résine aqueuse.

**8.** Procédé de production de la composition de résine aqueuse selon l'une quelconque des revendications 1 à 7, le procède comprenant :

a) l'addition de

i. 100 parties en masse d'un copolymère d'un acide carboxylique éthyléniquement insaturé en $\alpha$, $\beta$ et d'une oléfine contenant des motifs constitutifs dérivés d'une oléfine pour au moins 50 % en masse dans le copolymère et ayant un poids moléculaire de 1000 à 100 000 ;
ii. 0,1 à 10 parties en masse d'un polymère d'acide carboxylique contenant des motifs constitutifs dérivés d'un acide carboxylique éthyléniquement insaturé en $\alpha$, $\beta$ pour au moins 90 % en masse dans le polymère et ayant un poids moléculaire de 500 à 30 000 et
iii. 0,5 à 0,9 % d'un neutralisant à un milieu aqueux,

b) l'addition d'eau pour obtenir une concentration de la particule de polymère de 25 à 70 % en masse,
c) l'élévation de la température jusqu'à 70 à 250 °C pour dissolution et dispersion des deux polymères,
d) l'addition d'eau après dissolution ou dispersion suivie d'un vieillissement pendant environ une heure à 70 à 250 °C,
e) et un refroidissement consécutif jusqu'à une température entre la température ambiante et 60 °C.

**9.** Utilisation de la composition de résine aqueuse selon l'une quelconque des revendications 1 à 7 pour le traitement de surfaces métalliques.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3131370 A
- JP 4014191 B
- JP 2005220237 A
- JP 2000282254 A
- JP 7051758 B
- JP 2005206921 A

**Non-patent literature cited in the description**

- **SHIGEYOSHI MAEDA.** Metal as an adherend and its surface. *The Adhesion Society of Japan,* 1993, vol. 13 (1), 1